# EUROPEAN PATENT SPECIFICATION

(11) **EP 1 905 289 B1**
(45) Date of publication and mention of the grant of the patent: **21.10.2009**
(21) Application number: 07117105.2
(22) Date of filing: 25.09.2007
(51) Int. Cl.: A01B 59/041

(54) **Side stabilizer**
Seitenstabilisator
Stabilisateur latéral

(30) Priority: 29.09.2006 FI 20065612
(43) Date of publication of application: 02.04.2008
(73) Proprietor: LH Lift Oy, 41370 Kuusa (FI)
(72) Inventor: Viikki, Paavo, 41370 Kuusa (FI)
(74) Representative: Helke, Kimmo Kalervo

(56) References cited:
- EP-A- 0 998 838
- EP-A- 1 342 399
- DE-C1- 4 135 809
- DE-C1- 4 310 027
- GB-A- 2 103 064

## Description

The present invention relates to a side stabilizer, which is intended for the three-point coupling of a tractor, and which side stabilizer includes
- two body pieces arranged to form a telescopic structure, at both ends of which mounts are arranged for attaching the side stabilizer, and
- a catch supported moveably on one of the body pieces, for preventing the mutual longitudinal movement of the body pieces, when the catch is in the locking position, for which purpose there is a locking structure in the catch, a locking detent corresponding to which being arranged in the body piece without a catch.

Particularly in tractors, a three-point coupling is used to attach implements. Usually the three-point coupling is formed of two lifting arms and one pushing arm, which are mounted on the tractor by pivot joints. To prevent lateral movement of the implement, or to determine its position, side stabilizers are also arranged between the lifting arms and the tractor. In some applications, at least one of the side stabilizes is arranged to lock automatically in a specific position of the implement. Such a side stabilizer is disclosed in US patent number 5462303. The disclosed side stabilizer includes a telescopic structure formed of two body pieces, to which a catch is connected. The catch is connected to the tractor, in such a way that, when the lifting arms are in the raised position, the catch is in the locked position. Lateral movement of the implement is then prevented. When the lifting arms are lowered, the catch rotates and releases the side stabilizer from the locking. Thus the lifting arms can move laterally to the amount permitted by the side stabilizer.

Another side stabilizer with a different locking structure is disclosed in EP-A-0 998 838.

There are, however, many drawbacks in the disclosed side stabilizer. The structure of the side stabilizer is open, allowing dirt to collect in the side stabilizer. In addition, particularly the catch must be of a sturdy construction, because loads are transmitted through it from one body piece to the other. In practice, the catch then becomes large and heavy to operate. In addition, the manufacture of the side stabilizer involves numerous work stages while the welded joints in particular form weak points in terms of durability. Further, the side stabilizer is only suitable for certain kinds of three-point coupling.

The invention is intended to create a new type of side stabilizer, which is more durable and reliable in operation than previously, but also more versatile than previously. The characteristic features of the present invention are stated inclaim 1. Further embodiments are stated in the accompanying dependent claims. According to the invention, the body pieces are arranged in such a way that they lock without excessively stressing the catch. Thus the catch and the entire side stabilizer can be designed and dimensioned more precisely than previously. In other words, particularly the catch can be more lightly constructed than previously, with no loss in the durability and loadability of the side stabilizer. At the same time, the catch can be shaped more freely, so that protected structures can be made. The durability of the side stabilizer and its ability to remain clean can be further improved by manufacturing the catch and the body pieces in a certain way. In the manufacture of the side stabilizer according to the invention, there are advantageously few stages, which accelerates manufacture and improves the durability of the side stabilizer. In addition, the operational length of the side stabilizer can be easily altered, so that the side stabilizer can be used in different kinds of three-point couplings, or the properties of the side stabilizer can be easily altered. Despite its versatile construction, the side stabilizer according to the invention is extremely durable.

In the following, the invention is examined in detail with reference to the accompanying drawings showing some practical applications of the invention, in which
- Figure 1: shows the side stabilizer according to the invention in the locking position, seen at an angle from above,
- Figure 2: shows an axonometric view of the side stabilizer according to the invention in the open position,
- Figure 3: shows an exploded view of the components of the side stabilizer of Figure 1,
- Figure 4: shows a cross-section of Figure 1 along the plane A-A,
- Figure 5a: shows a second embodiment of the side stabilizer according to the invention in the locking position, seen at an angle from above,
- Figure 5b: shows the side stabilizer of Figure 5a in the open position,
- Figure 6a: shows a third embodiment of the side stabilizer according to the invention in the open position, seen at an angle from above,
- Figure 6b: shows the side stabilizer of Figure 6a in the locking position.

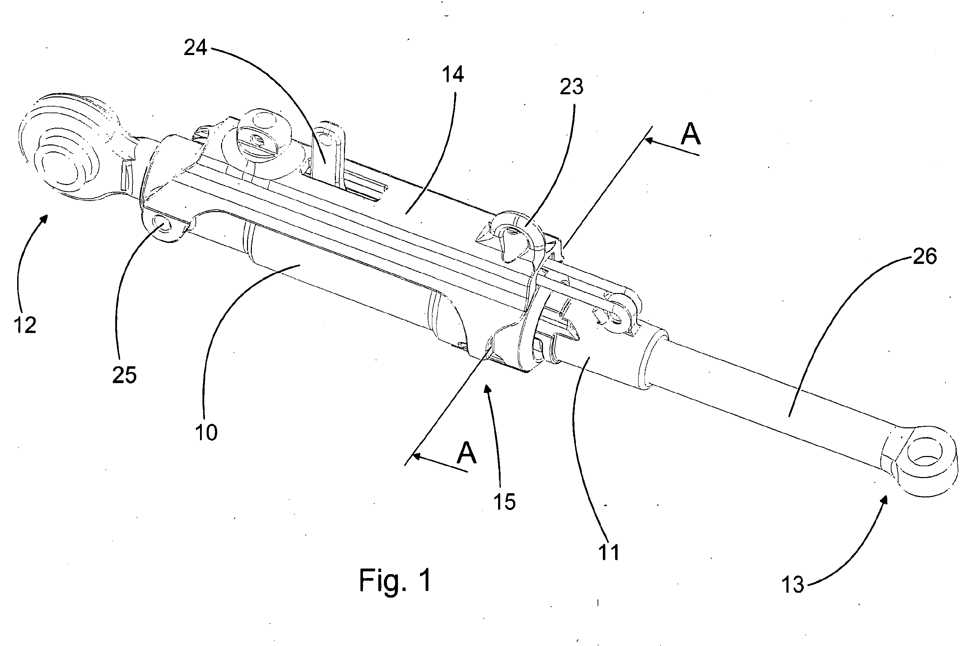

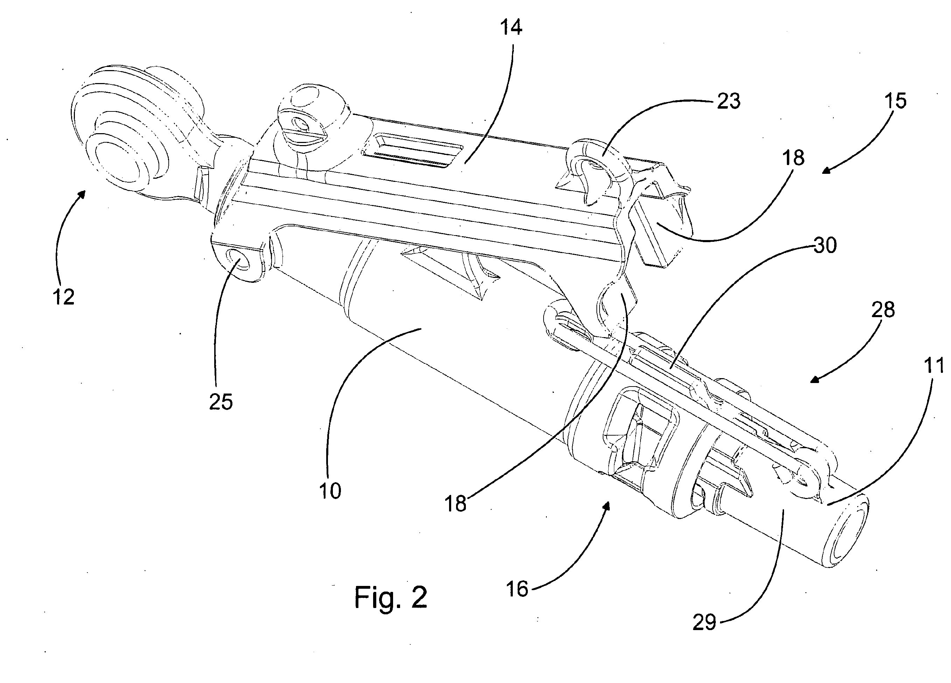

Figure 1 shows the side stabilizer according to the invention, which is intended mainly for the three-point coupling of a tractor. By means of the side stabilizer in question, the lateral movement of the lifting arms can be limited automatically. The side stabilizer includes two body pieces 10 and 11 arranged to form a telescopic structure. In other words, the body pieces fit at least partly inside each other and can be moved longitudinally relative to each other for a limited distance. In addition, mounts 12 and 13 are arranged at each end of the telescopic structure for attaching the side stabilizer. From the said mounts the side stabilizer is attached at one end to the chassis of the tractor and at the other end to a lifting arm (not shown). In addition, a catch 14 is supported moveably on one of the body pieces 10, 11, to prevent lateral movement when the catch 14 is in the locking position. In other words, in the locking position, the catch locks the side stabilizer and prevents the mutual movement of the body pieces. Figure 1 shows the side stabilizer in the locking position. For locking, there is a locking structure 15 in the catch 14, a locking detent 16 corresponding to which is arranged in the body part 10, 11 without the catch. According to the invention, in the body part 10, 11 equipped with the catch 14 too there is a second locking detent 17, which corresponds to the catch locking structure 15 (Figure 2). Thus the locking effect is transmitted from one body piece to another directly by means of the catch, without excessively loading the catch. Thus the catch can be dimensioned to be lighter than previously and the loadings caused by the movement of the lifting arm are almost only in the longitudinal direction of the side stabilizer.

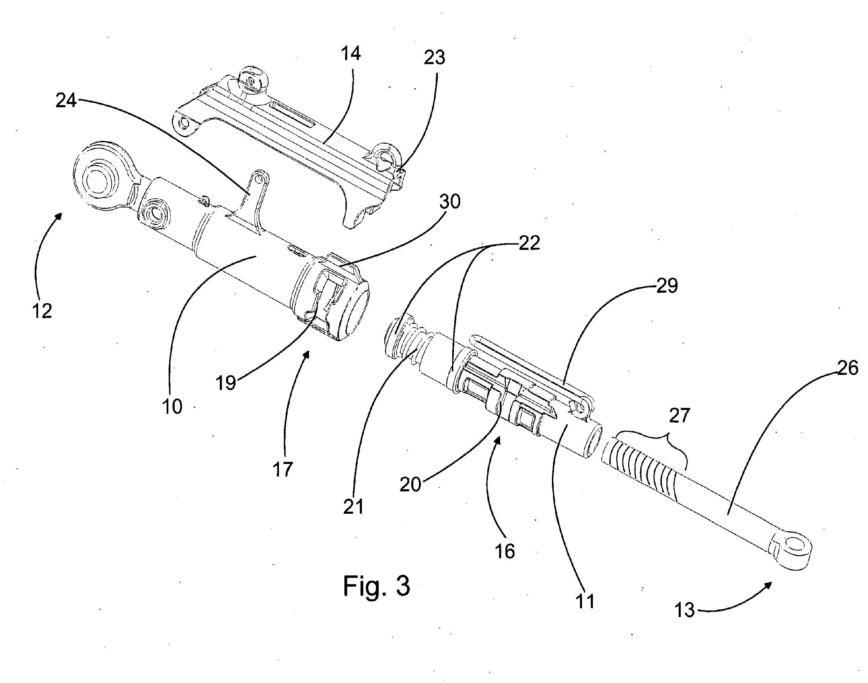

According to the invention, the locking structure 15 is formed of two wedge pieces 18 arranged in the catch 14, which are arranged to settle on opposite sides of the body pieces 10, 11 in the locking position. This achieves an optimal locking effect while keeping the construction of the catch simple. Figure 2 shows the catch 14 in the open position. In other words, the catch has been raised and the locking between the body parts is released. Figure 2 also shows the wedge pieces 18 and locking detent 16 according to the invention. Figure 3 shows a second locking detent 17.

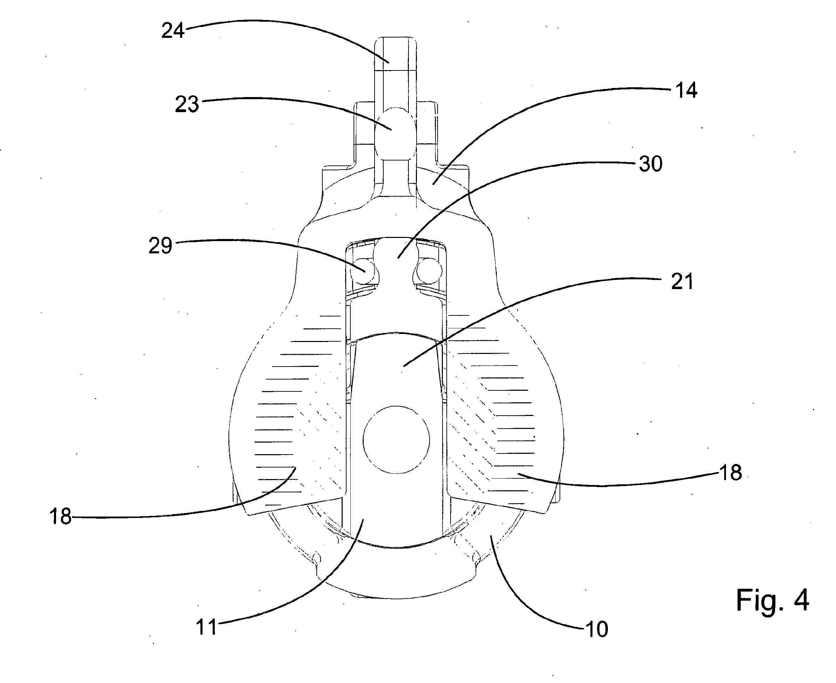

Figure 3 shows the components of the side stabilizer according to the invention detached from each other. According to the invention, in each body pieces 10 and 11 the locking detents 16 and 17 are formed of recesses 19 and 20. In addition, the longitudinal width of the recesses 19 and 20 corresponds essentially to the thickness of the wedge piece. This achieves sure locking with little free play. At the same time, the catch can be made as light as possible. In practice, the width of the wedge piece 18 is arranged in such a way that, in the locking position of the catch 14, it extends into the recesses 19 and 20 of the body pieces 10 and 11 (Figure 4). In other words the forces caused by the loading are transmitted through the wedge piece directly from one body piece to the other, so that the catch itself remains largely unloaded.

In the embodiment described, the catch 14 is attached to the outer body piece 10 in the telescopic side stabilizer. Thus the catch is the outermost structure of the side stabilizer and can be easily connected to the tractor, for example, by means of a cable. In addition, the catch 14 is arranged to cover the locking detent 17 of the body piece 10 in question. This can be seen particularly in Figure 1, in which the catch 14 lies against the outmost body piece 10. This forms a very smooth construction while at the same time the locking detent remains well protected. The shaping according to the locking detent of the catch also guides the catch into the locking position and can transmit even large forces.

In addition, the side stabilizer is more durable than before. In practice, there is also little dirtying, as in the locking position of the catch 14 the locking detent 16 of the inner body piece 11 is inside the outer body piece 10. In other words, most of the inner body piece is always inside the outer body piece, so that there as little surfaces as possible to be dirtied. In Figure 4, the body pieces 10 and 11 are at the point at which the catch 14 can rotate into its locking position. The maximum movement of the body pieces 10 and 11 is determined by springs 21 and collars 22 placed around the inner body piece 11. In practice, the maximum mutual movement of the body pieces is about 150 mm, which is sufficient for most applications. The limits of the movement can be adjusted by altering the location and size of the collars.

In addition to the new type of operating principle, the side stabilizer according to the invention is manufactured in a new way. At least the body pieces 10 and 11, as well as the catch 14 are precision-cast pieces. The use of this method achieves durable pieces, which are ready for use with almost no machining stages. At the same time, the structure of the pieces is homogeneous, without points of discontinuity. On the other hand, the operational components can be fitted as part of the casting. For example, a lug 23, to which the operating cable of the catch 14 is attached, can be cast into the catch 14. Correspondingly, a protrusion 24, by means of which the catch 14 can be locked into its locking position, can be shaped in the inner body piece 11.

The use of the locking arrangement according to the inventions avoids unnecessary loading of the catch. At the same time, the pivot intended for the rotation of the catch can be considerably more slender than previously. In practice, the catch 14 is, in fact, rotatably attached to the outer body piece 10 by a pin 25, by means of which the mount 12 at the end in question is also attached to the body piece 10. The pin in question can be dimensioned to allow for the attachment of the mount, as there is little strain from the catch. Only the rotation of the catch stresses the pin slightly. However, the locking between the body pieces is then free, so that the catch only imposes a small load on the pin.

In various applications of the invention, the required length of the side stabilizer can vary. According to the invention, there can be a threaded joint between the inner body piece 11 and its mount 13. In fact, the mount 13 is formed of a bar 26 with a ring end, in which there is an outer thread 27. A corresponding inner thread is arranged in the inner body piece. Thus the bar with the ring end can be rotated and thus operational length of the side stabilizer can be altered. In principle, the side stabilizer can be attached in either direction to the tractor.

In addition, the catch can also be attached to the inner body piece.

The body pieces in the telescopic structure of the side stabilizer are arranged to move longitudinally over a limited distance, when the catch is in the open position. In addition to this, there is a rotation-prevention structure 28 between the body pieces 10 and 11, which prevents the rotation of the body pieces 10 and 11 relative to each other. The catch can then rotate unobstructedly to its locking position. According to the invention, the rotation-prevention structure 28 is formed of a guide 29 arranged in the inner body piece 11, a corresponding guide detent 30 being arranged in the longitudinal direction in the outer surface of the outer body piece 10 of the side stabilizer. The said guide detent can be easily formed as part of the precision-cast piece. At the same time, a simple wire loop, which is durable and can be easily kept clean, can be used as the guide. The rotation of the catch to the locking position can be further facilitated by arranging suitable bevels in the body pieces and their recesses. The catch locking position will then be reached surely and rapidly.

Figure 4 shows a cross-section of the side stabilizer according to the invention. Here, the wedge pieces 18 of the catch 14 are seen outermost. In practice, almost all of each wedge piece 18 is located in the recesses in the locking position. The surfaces of the wedge pieces, which are in contact with the body pieces, are shown bevelled in Figure 4. The diagonally hatched area shows the size of the contact surface of the wedge pieces and the inner body piece. Correspondingly, the horizontally hatched area shows the size of the contact surface of the wedge pieces and the outer body piece. The arrangement in question avoids the rotation of the wedge piece, so that only sheer loading arises. This also avoids the overloading of the catch.

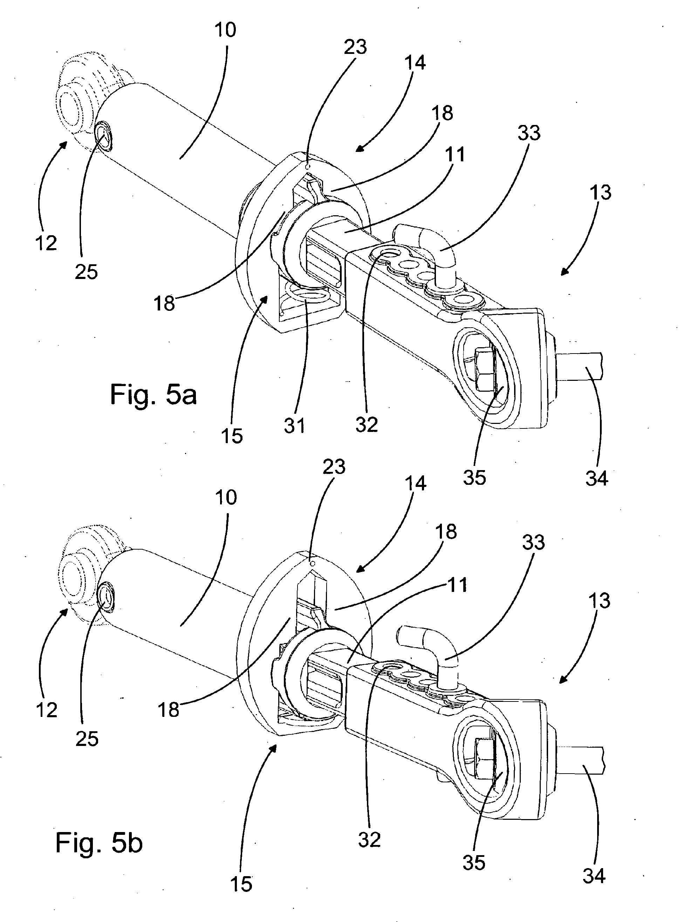

Figures 5a and 5b show a second embodiment of the side stabilizer according to the invention. In this case, the outer body piece 10 and its mount 12 are nearly identical with the embodiment described above. The catch 14 too is support moveably on the body piece 10. In the second embodiment, however, the catch is very small in size and is arranged to move in the transverse direction of the side stabilizer instead of rotating. In the embodiment shown, the catch 14 is supported on the locking detent of the outer body piece 10. In practice, the detaching and rotation of the catch are prevented. The catch is manufactured as several components and is assembled in its final form around the outer body piece. The shaping of the catch 14 is used to form wedge pieces 18 on its upper part, which also extends, in the locking position of the catch, into recesses in the inner body piece. Thus the locking structure 15 according to the invention is formed.

In addition, a hole is machined in the catch 14, in order to form an operational lug 23. In addition, there is a spring element 31 between the body piece 10 and the catch, which seeks to move the catch in to the locking position (Figure 5a). In addition, the inner body piece 11 is partly square, thus avoiding the mutual rotation of the body pieces 10 and 11. The same reference numbers are used for components that are operationally similar. In the second embodiment, there is, in addition, length adjustment, which is implemented using a separate mount 13. Here, the shape of the mount 13, corresponds to that of the inner body piece 11 and the pieces are arranged to slide relative to each other. In other words, the mount 13 and the inner body piece 11 are arranged to form a telescopic structure, the length of which can be adjusted. In addition, there is a hole in the body piece 11, with corresponding holes 32 arranged in the mount 13. By means of a suitable pin 33 set in the holes, the mutual movement of the mount 13 and the inner body piece 11 can be locked. On the other hand, removing the pin allows easy adjustment of the length of the side stabilizer. In the mount 13, there is also, an attachment bolt 34 fitted to a ball joint 35.

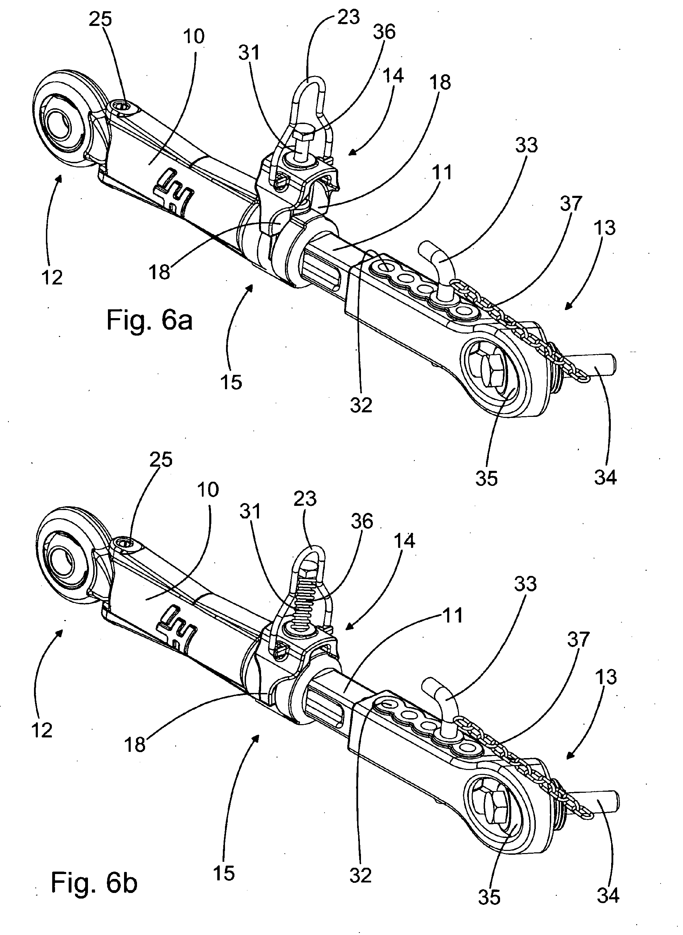

Figures 6a and 6b show a third embodiment of the side stabilized according to the invention. The main principles of the side stabilizer correspond to the side stabilizer shown in Figure 5a and 5b. In this case too, the catch 14 is of a small size and is arranged to move in the transverse direction of the side stabilizer, instead of rotating. In the same way as the first embodiment, the catch 14 is open, but is attached by a bolt 36 to the body piece 10. In addition, there is a spring element 31, which presses the catch 14 into the locking position, i.e. in this case downward (Figure 6a). Rotation of the bolt 36 or the nut on it allows the spring element 31 to be adjusted. Similarly, the catch can, if necessary, be easily detached for maintenance or replacement. In the catch 14 there is also a lug 23, which here is formed of spring steel, taking into account the bolt 36. The lug 23 can be rotated relative to the catch 14.

In this third embodiment too a telescopic mount 13 is used, so that the length of the side stabilizer can be easily altered. A chain 37 prevents loss of the pin 33 located in the hole 32. In addition, the pin of the second mount 12 is, in this case, vertical. Thus the outer body piece 10 has been able to be dimensioned to be even narrower, but at the same time more durable. In the second and third embodiments, the mutual rotation of the body pieces is prevented by using a square profile.

The side stabilizer according to the invention is durable and reliable in operation. Particularly the locking structure keeps the construction simple and at the same time avoids detrimental torque. In addition, the manufacture of the side stabilizer is faster that previously while there are fewer separate components than previously. It is also possible to shape the various components more freely while in the side stabilizer there are few protrusions to collect dirt. The sure locking, which is achieved without excessive loading of the catch, is also important.

## Claims

1. Side stabilizer, which is intended for the three-point coupling of a tractor, and which side stabilizer includes
- two body pieces (10, 11) arranged to form a telescopic structure, at both ends of which mounts (12, 13) are arranged for attaching the side stabilizer, and
- a catch (14) supported moveably on one of the body pieces (10 , 11), for preventing the mutual longitudinal movement of the body pieces (10, 11), when the catch (14) is in the locking position, for which purpose there is a locking structure (15) in the catch (14), a locking detent (16) corresponding to which being arranged in the body piece (10, 11) without a catch, and
in the body piece (10, 11) too, that is equipped with the catch (14), there is a second locking detent (17), which corresponds to the locking structure (15) of the catch (14), **characterized in that** the locking structure (15) is formed of two wedge pieces (18) arranged in the catch (14), which are arranged, in the locking position of the catch (14), to settle on opposite side of the body pieces (10, 11).

2. Side stabilizer according to Claim 1, **characterized in that** in each of the body pieces (10, 11), the locking detents (16, 17) are formed of recesses (19, 20), the width of which in the longitudinal direction of the side stabilizer essentially corresponds to the thickness of the wedge piece (18).

3. Side stabilizer according to Claim 2, **characterized in that** the width of the wedge piece (18) is arranged in such a way that it extends, in the locking position of the catch (14), into the recesses (19, 20) of the body pieces (10, 11).

4. Side stabilizer according to any of Claims 1 - 3, **characterized in that** the catch (14) is attached to the outer body piece (10) in the telescopic side stabilizer and the catch (14) is arranged to cover the locking detent (17) of the body piece (10) in question.

5. Side stabilizer according to any of Claims 1 - 4, **characterized in that**, in the locking position of the catch (14), the locking detent (16) of the inner body piece (11) is inside the outer body piece (10).

6. Side stabilizer according to any of Claims 1 - 5, **characterized in that** the body pieces (10, 11) and the catch (14) are precision-cast pieces.

7. Side stabilizer according to any of Claims 1 - 6, **characterized in that** there is a threaded joint between the inner body piece (11) and its mount (13).

8. Side stabilizer according to any of Claims 1 - 7, **characterized in that**, between the body pieces (10, 11), there is a rotation-prevention structure (28), which is formed of a guide (29) arranged in the inner body piece (11), the guide detent (30) corresponding to which is arranged in the axial direction in the outer surface of the outer body piece (10).

9. Side stabilizer according to any of Claims 1 - 8, **characterized in that** the catch (14) is rotatably attached to the outer body piece (10) by a pin (25), by means of which the mount (12) at the end in question is also attached to the body piece (10).

10. Side stabilizer according to any of Claims 1 - 8, **characterized in that** the catch (14) is attached to the locking detent (17) of the outer body piece (10) in a manner that allows it to slide.

11. Side stabilizer according to any of Claims 1 - 10, **characterized in that** the mount (13) and the inner body piece (11) are arrange to form a telescopic structure, the length of which is arranged to be adjustable.

## Patentansprüche

1. Für die Dreipunktaufhängung eines Traktors bestimmter Seitenstabilisator, der
- zwei Rumpfteile (10, 11), die eine Teleskopkonstruktion bilden, an deren beiden Enden Befestigungselemente (12, 13) zur Befestigung des Seitenstabilisators angeordnet sind, und
- eine an einem der Rumpfteile (10, 11) beweglich abgestützte Arretierung (14) zur Verhinderung gegenseitiger Längsbewegung der Rumpfteile (10, 11) in Verriegelungsstellung der Arretierung (14), wofür die Arretierung (14) einen Verriegelungsmechanismus (15) hat, und der diesem entsprechende Verriegelungsanschlag (16) an dem arretierungslosen der Rumpfteile (10, 11) angeordnet ist, umfasst, und
auch an dem mit der Arretierung (14) versehenen Rumpfteil der Rumpfteile (10, 11) ein zweiter Verriegelungsanschlag (17) angeordnet ist, der dem Verriegelungsmechanismus (15) der Arretierung (14) entspricht, **dadurch gekennzeichnet, dass** der Verriegelungsmechanismus (15) aus zwei an der Arretierung (14) angeordneten keilförmigen Teilen (18) besteht, die dazu eingerichtet sind, in Verriegelungsstellung der Arretierung (14) auf einander entgegengesetzten Seiten der Rumpfteile (10, 11) einzugreifen.

2. Seitenstabilisator nach Anspruch 1, **dadurch gekennzeichnet, dass** die Verriegelungsanschläge (16, 17) an beiden Rumpfteilen (10, 11) von Vertiefungen (19, 20) gebildet werden, deren Breite in Längsrichtung des Seitenstabilisators im Wesentlichen der Dicke des keilförmigen Teils (18) entspricht.

3. Seitenstabilisator nach Anspruch 2, **dadurch gekennzeichnet, dass** die Breite des keilförmigen Teils (18) so bemessen ist, dass es sich in Verriegelungsstellung der Arretierung (14) in die Vertiefungen (19, 20) der Rumpfteile (10, 11) erstreckt.

4. Seitenstabilisator nach irgendeinem der Ansprüche 1 bis 3, **dadurch gekennzeichnet, dass** die Arretierung (14) an dem teleskopischen Seitenstabilisator am äußeren Rumpfteil (10) befestigt ist und die Arretierung (14) so eingerichtet ist, dass sie den Verriegelungsanschlag (17) des besagten Rumpfteils (10) abdeckt.

5. Seitenstabilisator nach irgendeinem der Ansprüche 1 bis 4, **dadurch gekennzeichnet, dass** in Verriegelungsstellung der Arretierung (14) der Verriegelungsanschlag (16) des inneren Rumpfteils sich innerhalb des äußeren Rumpfteils (10) befindet.

6. Seitenstabilisator nach irgendeinem der Ansprüche 1 bis 5, **dadurch gekennzeichnet, dass** die Rumpfteile (10, 11) und die Arretierung (14) aus Präzisionsgussteilen bestehen.

7. Seitenstabilisator nach irgendeinem der Ansprüche 1 bis 6, **dadurch gekennzeichnet, dass** zwischen dem inneren Rumpfteil (11) und seinem Befestigungselement (13) eine Gewindeverbindung vorhanden ist.

8. Seitenstabilisator nach irgendeinem der Ansprüche 1 bis 7, **dadurch gekennzeichnet, dass** zwischen den Rumpfteilen (10, 11) eine Verdrehsicherung (28) vorhanden ist, die aus einer am inneren Rumpfteil (11) angeordneten Führung (29) und einem an der Außenseite des äußeren Rumpfteils (10) angeordneten axialen Leitelement (30) besteht.

9. Seitenstabilisator nach irgendeinem der Ansprüche 1 bis 8, **dadurch gekennzeichnet, dass** die Arretierung (14) am äußeren Rumpfteil (10) drehbar durch einen Bolzen (25) befestigt ist, mit dem gleichzeitig das Befestigungselement (12) des betreffenden Endes am Rumpfteil (10) befestigt ist.

10. Seitenstabilisator nach irgendeinem der Ansprüche 1 bis 8, **dadurch gekennzeichnet, dass** die Arretierung (14) gleitbar an dem Verriegelungsanschlag (17) des äußeren Rumpfteils (10) befestigt ist.

11. Seitenstabilisator nach irgendeinem der Ansprüche 1 bis 10, **dadurch gekennzeichnet, dass** das Befestigungselement (13) und das innere Rumpfteil (11) als teleskopartige Konstruktion ausgebildet sind, deren Länge regulierbar ist.

## Revendications

1. Stabilisateur latéral destiné à l'attelage trois points d'un tracteur et lequel stabilisateur latéral comprend
- deux parties du corps (10, 11) disposées de sorte à former une structure télescopique, aux deux extrémités desquelles sont disposées des attaches (12, 13) pour attacher le stabilisateur latéral, et
- un loquet (14) attaché de manière mobile sur l'une des parties du corps (10, 11) pour empêcher le mouvement longitudinal mutuel des parties du corps (10, 11), lorsque le loquet (14) est dans sa position de verrouillage, dans lequel but il y a une structure de verrouillage (15) dans le loquet (14) et un cran de verrouillage (16) correspondant qui est disposé dans la partie du corps (10, 11) ne contenant pas de loquet, et
également dans la partie du corps (10, 11) équipée du loquet (14) il y a un deuxième cran de verrouillage (17), qui correspond à la structure de verrouillage (15) du loquet (14), **caractérisé en ce que** la structure de verrouillage (15) est formée de deux cales (18) disposées dans le loquet (14), qui sont disposés, dans la position de verrouillage du loquet (14), de sorte à se placer sur des côtés opposés des parties du corps (10, 11).

2. Stabilisateur latéral selon la revendication 1, **caractérisé en ce que** dans chaque partie du corps (10, 11) les crans de verrouillage (16, 17) sont formés d'encoches (19, 20), dont la largeur dans la direction longitudinale du stabilisateur latéral correspond essentiellement à l'épaisseur de la cale (18) .

3. Stabilisateur latéral selon la revendication 2, **caractérisé en ce que** la largeur de la cale (18) est telle que dans la position de verrouillage du loquet (14) elle arrive jusque dans les encoches (19, 20) des parties du corps (10, 11).

4. Stabilisateur latéral selon l'une quelconque des revendications 1 - 3, **caractérisé en ce que** le loquet (14) est attaché à la partie du corps extérieure (10) du stabilisateur latéral télescopique, et le loquet (14) est disposé de sorte à couvrir le cran de verrouillage (17) de la partie du corps (10) en question.

5. Stabilisateur latéral selon l'une quelconque des revendications 1 - 4, **caractérisé en ce que**, dans la position de verrouillage du loquet (14), le cran de verrouillage (16) de la partie du corps intérieure (11) est à l'intérieur de la partie du corps extérieure (10).

6. Stabilisateur latéral selon l'une quelconque des revendications 1 - 5, **caractérisé en ce que** les parties du corps (10, 11) et le loquet (14) sont des pièces de moulage de précision.

7. Stabilisateur latéral selon l'une quelconque des revendications 1 - 6, **caractérisé en ce qu'**il y a un assemblage fileté entre la partie du corps intérieure (11) et l'attache (13).

8. Stabilisateur latéral selon l'une quelconque des revendications 1 - 7, **caractérisé en ce qu'**entre les parties du corps (10, 11) il y a une structure destinée à empêcher la rotation (28), qui se compose d'un guide (29) disposé sur la partie du corps intérieure (11) et d'un cran de guidage (30) correspondant qui est disposé dans la direction axiale sur la surface extérieure de la partie du corps extérieur (10).

9. Stabilisateur latéral selon l'une quelconque des revendications 1 - 8, **caractérisé en ce que** le loquet (14) est attaché, de manière à pouvoir pivoter, à la partie du corps extérieure (10) par une clavette (25), par laquelle l'attache (12) de l'extrémité en question est également attachée à la partie du corps (10).

10. Stabilisateur latéral selon l'une quelconque des revendications 1 - 8, **caractérisé en ce que** le loquet (14) est attaché au cran de verrouillage (17) de la partie du corps extérieure (10) de manière à lui permettre de glisser.

11. Stabilisateur latéral selon l'une quelconque des revendications 1 - 10, **caractérisé en ce que** l'attache (13) et la partie du corps intérieure (11) sont disposées en une structure télescopique, la longueur de laquelle est disposée à être ajustable.
